# EUROPÄISCHE PATENTSCHRIFT

(11) **EP 2 654 317 B1**
(45) Veröffentlichungstag und Bekanntmachung des Hinweises auf die Patenterteilung: **18.06.2014**
(21) Anmeldenummer: 12164373.8
(22) Anmeldetag: 17.04.2012
(51) Int. Cl.: H04Q 1/14

(54) **Ein-/Ausgabebaugruppe mit Anzeigeelement**
Input/output component with display element
Composant d'entrée/de sortie doté d'un élément d'affichage

(43) Veröffentlichungstag der Anmeldung: 23.10.2013
(73) Patentinhaber: Siemens Aktiengesellschaft, 80333 München (DE)
(72) Erfinder: Ringer, Ulrich, 92224 Amberg (DE)

(56) Entgegenhaltungen:
- WO-A1-2007/051976
- US-A1- 2005 244 114

## Beschreibung

Die Erfindung betrifft eine Ein-/Ausgabebaugruppe, umfassend ein Anschlusselement mit mehreren Anschlussstellen zum Anschließen von Ein- oder Ausgangsleitungen, ein Gehäuse, welches das Anschlusselement derart aufnimmt, dass die Anschlussstellen zugänglich und sichtbar sind, Anzeigeelemente, wobei die Anzeigeelemente mehrere Zustandsanzeigen mit je einem einer Zustandsanzeige zugeordnetem Lichtleiter aufweisen.

Das Dokument W02007051976 (Hellermanntyton Data Limited - James, Jason, Lee) publiziert am 10-05-2007, offenbart zusätzlich ein Eingabe - / Ausgabe Modul mit einer Vielzahl von Verbindungspunkten.

In der industriellen Prozessautomatisierung werden zunehmend modular aufbaubare Automatisierungssysteme eingesetzt. Diese Automatisierungssysteme umfassen vorzugsweise unterschiedliche Baugruppen wie ein Netzteil, eine speicherprogrammierbare Steuerung, eine oder mehrere Kommunikationsbaugruppen und Ein-/Ausgabebaugruppen zum Anschluss von Anschlussleitungen, welche in dem zu steuernden industriellen Prozess hineinführen.

Bei den Ein-/Ausgabebaugruppen gibt es Kanalzustandsanzeigen, welche beispielsweise über eine Kombination von LED und Lichtleiter an einer Baugruppenfront dieser Baugruppen realisiert sind.

Es ist die Aufgabe der Erfindung bei Ein-/Ausgabebaugruppen mit Anschlussstellen die Leuchtkraft einer optischen Anzeige zu verbessern.

Für die Ein-/Ausgabebaugruppe, umfassend ein Anschlusselement mit mehreren Anschlussstellen zum Anschließen von Ein- oder Ausgangsleitungen, ein Gehäuse, welches das Anschlusselement derart aufnimmt, dass die Anschlussstellen zugänglich und sichtbar sind, Anzeigeelemente, wobei die Anzeigeelemente mehrere Zustandsanzeigen mit je einem einer Zustandsanzeige zugeordnetem Lichtleiter aufweisen, wobei ein Lichtleiter eine erste Leuchtfläche und einen Lichteingang aufweist, wobei im Inneren des Gehäuses ein Leuchtmittel derart angeordnet ist, dass das Licht in den Lichtleiter über den Lichteingang eingespeist wird und zur Anzeige eines Zustands über die erste Leuchtfläche austritt, dabei ist die erste Leuchtfläche in einer Stirnseite einer Seitenwand angeordnet, wird die Aufgabe dadurch gelöst, dass der Lichtleiter in der Seitenwand über eine Aufnahme in der Stirnseite der Seitenwand gehalten wird, wobei durch die Aufnahme der Lichtleiter im Wesentlichen im Bereich der ersten Leuchtfläche mit einem Teil seiner Mantelfläche eine Haftung zu dem Material der Seitenwand in der Aufnahme aufweist, wobei aufgrund der Haftung eine feste Verbindung herrscht, wodurch der Lichtleiter gehalten wird, wobei ein überwiegender Teil der Mantelfläche des Lichtleiters von dem Material der Seitenwand entkoppelt ist, wodurch eine Weiterleitung des Lichtes zur ersten Leuchtfläche verbessert wird.

Nach dem Stand der Technik wurden transparente Lichtleiter für die Zustandsanzeigen in einen lichtundurchlässigen Gehäuseteil verrastet. Die bauliche Einheit einer Zustandsanzeige bestand somit aus einem Lichtleiter und einem Gehäuseteil. Bei der hier vorgestellten Ausgestaltung der Ein-/Ausgabebaugruppe wird vorzugsweise über ein Zweikomponentenspritzgussverfahren der Lichtleiter in das Gehäuseteil bzw. in die Stirnfläche der Seitenwand des Gehäuses eingebracht. Um eine Lichtausbeute an der Leuchtfläche zu erhöhen ist es vorteilhaft, wenn der Lichtleiter nur mit einem Teil seiner gesamten Mantelfläche eine feste Verbindung mit der Stirnseite der Seitenwand des Gehäuses eingeht.

Es ist aufgefallen, dass Lichtleiter an Stellen an denen sie eine unmittelbare Verbindung mit einem Gehäusematerial eingehen deutlich an Effektivität verlieren. Die unmittelbare Verbindung entsteht bei einem Spritzgussverfahren durch ein Anspritzen des Lichtleiters an das Gehäusematerial. Wenn Lichtstrahlen einer Lichtquelle auf eine Grenzschicht zwischen zwei Medien unterschiedlicher optischer Dichte treffen, so werden sie nicht einfach reflektiert, sondern sie treten dabei vom optisch dichteren Medium z.B. den Lichtleiterkunststoff in ein optisch dünneres Medium wie z.B. Luft, an den Grenzschichten zwischen den beiden unterschiedlichen Medien, also hier dem Lichtleiterkunststoff und dem lichtundurchlässigen Gehäusekunststoff tritt für eine Lichtwelle keine Totalreflexion mehr auf und somit verliert das Licht an Intensität. Dadurch, dass der Lichtleiter nur noch in einem relativ geringen Teil des Gehäuses eine feste Verbindung durch das Anspritzen eingegangen ist, ist ein Lichttransport an die Stirnseite der Baugruppe zur Leuchtfläche des Lichtleiters verbessert worden.

Eine weitere Verbesserung wird erreicht, wenn die Seitenwand derart ausgestaltet ist, dass zwischen dem überwiegenden Teil der Mantelfläche des Lichtleiters und der Seitenwand ein Hohlraum derart ausgebildet ist, dass das Material der Seitenwand den Lichtleiter in einen überwiegenden Teil nicht berührt.

Wenn eine zweite Leuchtfläche in einer zum Anschlusselement gerichteten Seitenfläche der Seitenwand in Höhe einer Anschlussstelle angeordnet ist, wird auch eine optische Anzeige in unmittelbarer Nähe zu der Anschlussstelle verbessert und eine Diagnose erleichtert. Sollte bei einer derartig ausgestalteten Ein-/Ausgabebaugruppe im Betrieb der Baugruppe eine Diagnose erforderlich sein, so kann ein Monteur oder Inbetriebsetzer an die Baugruppe herantreten und sich bereits bei einer groben Draufsicht auf die Baugruppe über den Zustand der Baugruppe mittels der Zustandsanzeigen informieren. Da die erste Leuchtfläche in einer Stirnseite einer Seitenwand des Gehäuses angeordnet ist, wobei die Stirnseite Bestandteil der Baugruppenfront ist, wird der Zustand dieser Baugruppe augenscheinlich signalisiert. Geht diese Diagnose nun aber einen Schritt weiter, wobei beispielsweise nachgewiesen werden muss, ob eine bestimmte Ein- oder Ausgangsleitung wirklich zu einem bestimmten Zeitpunkt ein gewisses Signal trägt, so muss der Inbetriebsetzer oder Monteur genauer in die Baugruppe hineinsehen, welches beispielsweise bedeutet, dass er eine gewisse Farbkombination einer Anschlussleitung daraufhin prüft, ob sie laut Schaltplan wirklich an der für sie bestimmten Anschlussstelle liegt. Dieses Prüfen wird dem Inbetriebsetzer oder Monteur dadurch erleichtert, dass die zweite Leuchtfläche des Lichtleiters in Höhe der Anschlussstelle angeordnet ist und dadurch die betroffene Anschlussstelle direkt anleuchtet.

In einer weiteren Ausgestaltung der Ein-/Ausgabebaugruppe ist es vorteilhaft, wenn der Lichtleiter als ein Stück ausgestaltet ist und die Oberfläche im Bereich der zweiten Leuchtfläche mit einer optischen Berechnungsstelle versehen ist. Durch diese Art der Ausgestaltung wird gewährleistet, dass nicht nur eine Anzeige mittels des Lichtleiters über die erste Leuchtfläche an der Baugruppenfront aufleuchtet, sondern auch zusätzlich genügend signalgebendes Licht direkt an der Verdrahtung der Anschlussstelle erzeugt wird.

Aufgrund von beengten Platzverhältnissen in Ein-/Ausgabebaugruppen hat es sich als vorteilhaft erwiesen, in der Seitenwand einen Träger für das Leuchtmittel, insbesondere eine LED, anzuordnen. Bei besonders schmalwandigen Seitenwänden ist es vorteilhaft, den Träger als eine Folie mit Leiterbahnen auszugestalten.

Um einen Lichtschein auf die Anschlussstelle, also auf die Verdrahtungsstelle, zu verbessern ist es von Vorteil, wenn der Lichtleiter eine Ausnehmung aufweist, welche als der Lichteingang ausgestaltet ist und in die das Leuchtmittel eingepasst ist. Dabei werden besonders gute Diagnoseergebnisse erzielt, wenn die Lichteinspeisestelle im Wesentlichen gegenüber der zweiten Leuchtfläche angeordnet ist, um die optische Anzeige in unmittelbarer Nähe zu der Anschlussstelle zu verbessern.

Weiterhin ist es vorteilhaft, wenn das Leuchtmittel auf dem Träger eine SMD-LED angeordnet ist.

Um eine Ein-/Ausgabebaugruppe mit möglichst vielen Ein- oder Ausgangsleitungen zu versorgen, ist diese vorteilhaft derart ausgestaltet, dass das Gehäuse eine erste Seitenwand und eine zweite Seitenwand aufweist, wobei das Anschlusselement zwischen den beiden Seitenwänden angeordnet ist und eine erste Reihe und eine zweite Reihe von Anschlussstellen aufweist, wobei sich die erste Reihe parallel zu der ersten Seitenwand und die zweite Reihe parallel zu der zweiten Seitenwand längs erstreckt.

Im Nachfolgenden werden Ausführungsformen der Erfindung anhand der Zeichnung näher erläutert. Es zeigen:
- FIG 1: eine Ein-/Ausgabebaugruppe in einer dreidimensionalen Ansicht,
- FIG 2: einen Ausschnitt aus der in FIG 1 dargestellten Ein-/Ausgabebaugruppe,
- FIG 3: eine erste Ausgestaltungsvariante eines Lichtleiters,
- FIG 4: eine zweite Ausgestaltungsvariante eines Lichtleiters und
- FIG 5: eine Aufnahme für einen Lichtleiter.

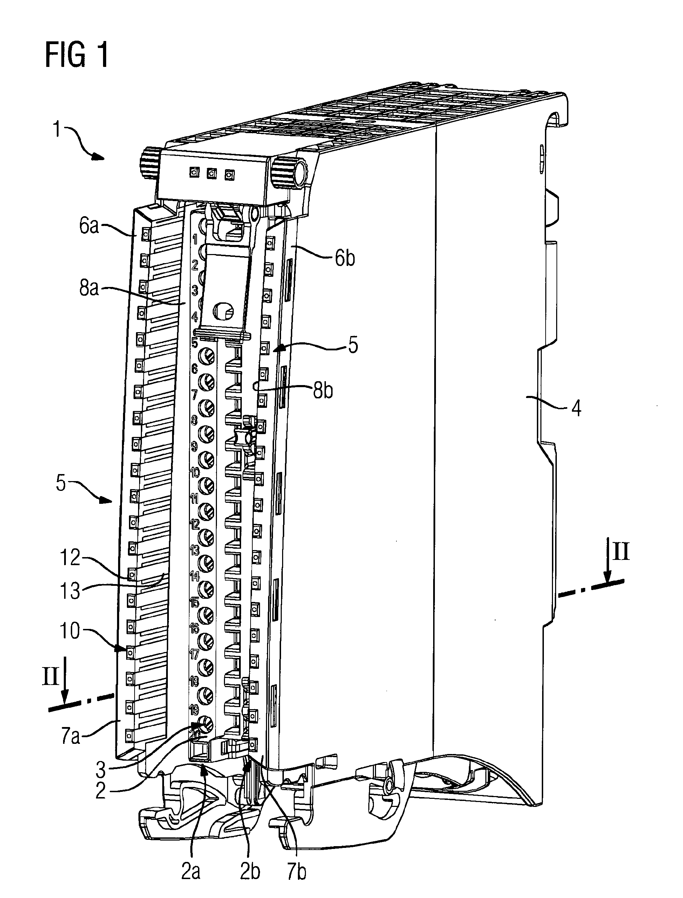

Gemäß FIG 1 ist eine Ein-/Ausgabebaugruppe 1 dargestellt, umfassend ein Anschlusselement 2 mit mehreren Anschlussstellen 3 zum Anschließen von Ein- oder Ausgangsleitungen, ein Gehäuse 4, welches das Anschlusselement 2 derart aufnimmt, dass die Anschlussstellen 3 zugänglich und sichtbar sind, Anzeigeelemente 5, wobei die Anzeigeelemente 5 mehrere Zustandsanzeigen mit je einem einer Zustandsanzeige zugeordneten Lichtleiter 10 aufweisen.

In der dreidimensionalen Draufsicht auf die Ein-/Ausgabebaugruppe 1 weist das Gehäuse 4 linksseitig eine erste Seitenwand 6a und rechtsseitig eine zweite Seitenwand 6b auf. Das Anschlusselement 2 ist dabei zwischen den beiden Seitenwänden 6a,6b angeordnet, wobei sich eine erste Reihe 2a und eine zweite Reihe 2b von Anschlussstellen 3 parallel zu den Seitenwänden 6a,6b erstreckt.

Das Anschlusselement 2 weist auf seiner Oberseite die Reihen 2a,2b mit den Anschlussstellen 3 auf. Auf seiner Unterseite weist das Anschlusselement 2 (in dieser Zeichnung nicht sichtbar) Steckkontakte auf, welche eine Verbindung zu elektronischen Komponenten im Inneren der Ein-/Ausgabebaugruppe herstellen. Dabei sind die Steckkontakte wiederum mit den einzelnen Anschlussstellen gekoppelt. Der Lichtleiter 10 ist derart in den Seitenwänden 6a,6b eingebettet, dass er mit einer nach innen gerichteten Seitenfläche 8a,8b der Seitenwände 6a,6b bündig abschließt. Bei dieser Anordnung zeigt eine erste Leuchtfläche 12 des Lichtleiters 10 aus den Stirnseiten 7a,7b der Seitenwände 6a,6b heraus. Eine zweite Leuchtfläche 13 des Lichtleiters 10 ist in den Seitenflächen 8a,8b der Seitenwände 6a,6b in Höhe der Anschlussstelle 3 angeordnet, wodurch eine optische Anzeige in unmittelbarer Nähe zu der Anschlussstelle gebildet ist und dem Inbetriebsetzer oder Monteur eine Diagnose erleichtert wird.

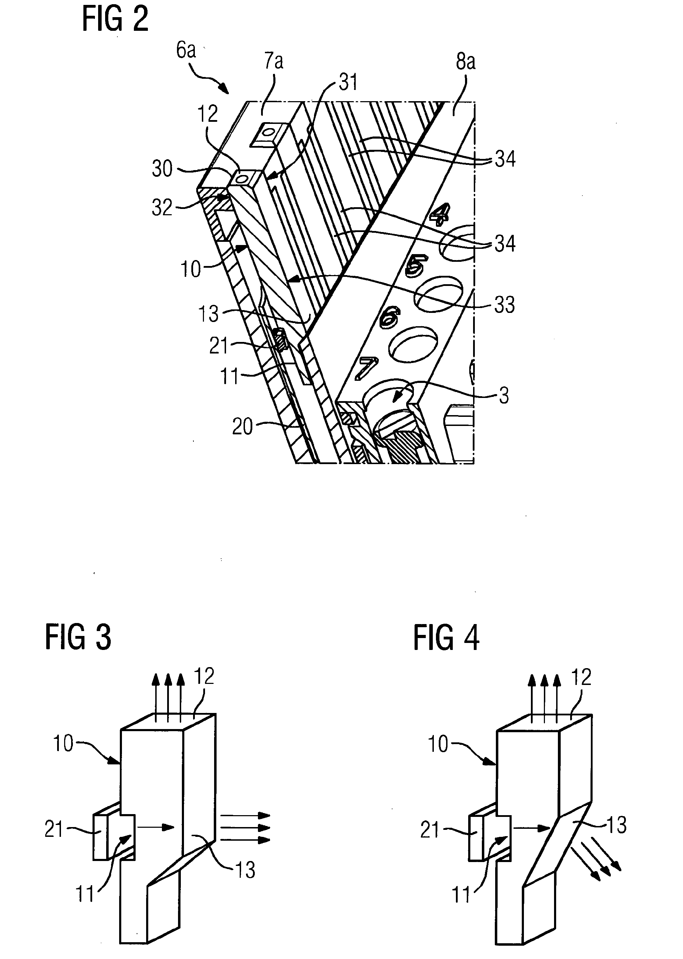

FIG 2 zeigt einen Ausschnitt aus der in FIG 1 dargestellten Ein-/Ausgabebaugruppe 1. Im Wesentlichen ist die erste Stirnseite 7a und die erste Seitenfläche 8a der Ein-/Ausgabebaugruppe 1 dargestellt. In einem rechtsseitigen Bereich der ersten Stirnfläche 7a ist der Lichtleiter 10 eingebettet, dabei ist der Lichtleiter 10 als ein Stück ausgestaltet und die Oberfläche im Bereich der zweiten Leuchtfläche 13 mit einer optischen Brechungsstelle versehen. In der Stirnseite 7a ist der Lichtleiter 10 mit seiner Leuchtfläche 12 in einer Aufnahme 30 eingebettet. Durch die Aufnahme 30 wird der Lichtleiter 10 im Wesentlichen im Bereich der ersten Leuchtfläche 12 mit einem Teil seiner Mantelfläche 32 in der Stirnseite 7a gehalten. Durch ein Zweikomponenten-Spritzgussverfahren wurde zwischen dem Material des Gehäuseteils, hier insbesondere die Stirnseite 7a, und dem Material des Lichtleiters 10 eine feste Verbindung durch Anspritzen des Lichtleiters 10 an das Gehäuseteil erreicht. Ein überwiegender Teil 33 der Mantelfläche des Lichtleiters 10 ist von dem Material der Seitenwand 6a entkopppelt, wodurch eine Weiterleitung des Lichtes zur ersten Leuchtfläche 12 verbessert wird.

Eine ganz offensichtliche Entkopplung wird erreicht, wenn zwischen den überwiegenden Teil der Mantelfläche 32 des Lichtleiters 10 und der Seitenwand 6a ein Hohlraum 34 angeordnet ist und derart ausgebildet ist, dass das Material der Seitenwand 6a das Material des Lichtleiters 10 in einem überwiegenden Teil nicht berührt. Es ist also vorteilhaft, wenn die Grenzschicht zwischen dem Material des Lichtleiters 10 und dem Material des Gehäuses entweder durch einen Hohlraum entkoppelt ist oder derart entkoppelt ist, dass eine Haftung zwischen beiden Materialien insbesondere eine Verbindung von Kohlenwasserstoffketten nicht existiert.

Die im Vergleich zur Gesamtbreite der Baugruppe relativ schmale Seitenwand 6a weist einen weiteren Hohlraum auf. In diesem weiteren Hohlraum ist ein Träger 20 eingebettet. Da der weitere Hohlraum beispielsweise nur eine Ausdehnung von 3 Millimetern aufweist, ist der Träger 20 als eine dünne Folie ausgestaltet, wobei diese Folie Leiterbahnen trägt und auf diese Folie ein Leuchtmittel 21 aufgebracht ist. Das Leuchtmittel 21 ist als eine SMD-LED ausgestaltet. Um das Leuchtmittel 21 möglichst nah an den Lichtleiter 10 zu bringen, ist dieser mit einer Ausnehmung versehen, welche einen Lichteingang 11 bildet. Die von der SMD-LED erzeugte Lichtstrahlung kann somit ungehindert in den Lichtleiter 10 eindringen und nicht nur wie bisher üblich an der ersten Leuchtfläche 12 austreten, sondern auch an der zweiten Leuchtfläche 13 um einen Lichtschein auf die Anschlussstelle 3 zu bilden und damit eine Diagnose zu erleichtern.

Die Ausführungsvariante des Lichtleiters 10 in FIG 2 ist so ausgestaltet, dass der Lichtleiter 10 ein stabförmiges Element bildet, welches in die Stirnseite 7a eingespritzt wurde und die Ausnehmung ist so ausgestaltet, dass wenn die erste Leuchtfläche 12 mit der Stirnseite 7a bündig abschließt auch die Ausnehmung, also der Lichteingang 11 formschlüssig auf der SMD-LED aufliegt.

FIG 3 zeigt eine weitere Ausgestaltungsvariante des Lichtleiters 10. Der Lichteingang 11 ist dabei so ausgestaltet, dass das Leuchtmittel 21 passgenau in den Lichtleiter 10 eingedrückt werden kann. Der Lichteingang 21 ist gegenüber der zweiten Leuchtfläche 3 angeordnet, diese Anordnung verbessert die optische Anzeige in unmittelbarer Nähe zu der Anschlussstelle 3. Durch drei parallel geführte Pfeile ist ein Lichtstrahl angedeutet. Der Lichtstrahl kann also zeitgleich aus der ersten Leuchtfläche 12 und der zweiten Leuchtfläche 13 austreten.

Gemäß FIG 4 ist eine weitere Optimierung hinsichtlich der Ausleuchtung der Anschlussstelle 3 wird mit einer weiteren stabförmigen Ausgestaltungsvariante des Lichtleiters 10 dargestellt. Dadurch, dass die zweite Leuchtfläche 13 auf einer Schrägfläche des Lichtleiters 10 angeordnet ist, wobei gegenüberliegend der Schrägfläche die Lichtquelle 21 angeordnet ist, kann der dem Leuchtmittel 21 in den Lichteingang 11 eingespeiste Lichtstrahl somit ähnlich wie in einem Prisma in den Lichtleiter 10 eingespeist werden und in einem 45° Winkel aus der zweiten Leuchtfläche 13 austreten. Der Lichtschein kann dadurch direkt auf die Anschlussstelle 3 gerichtet werden.

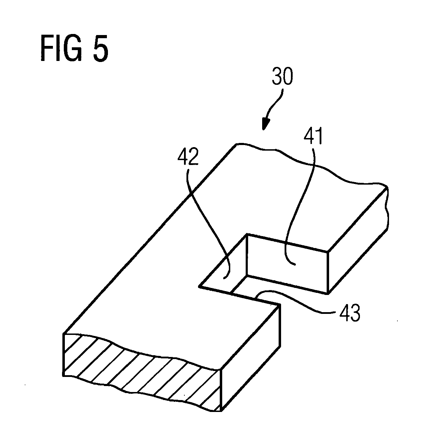

Gemäß FIG 5 ist ein Ausschnitt aus der Seitenwand 6a mit der Stirnfläche 7a und der Aufnahme 30 dargestellt. Die Aufnahme 30 bietet zum Kontakt mit dem Lichtleiter 10 eine erste Innenfläche 41, eine zweite Innenfläche 42 und eine dritte Innenfläche 43. In den Zweikomponenten-Spritzgussverfahren kann der Lichtleiter 10 an die drei Innenflächen 41,42,43 angespritzt werden und wird somit in der Stirnseite 7a des Gehäuses gehalten. Durch das Anspritzverfahren geht der Lichtleiter 10 mit einem Teil seiner Mantelfläche eine feste Verbindung mit den Innenflächen 41,42,43 der Aufnahme 30 ein.

## Patentansprüche

1. Ein-/Ausgabebaugruppe (1), umfassend
- ein Anschlusselement (2) mit mehreren Anschlussstellen (3) zum Anschließen von Ein- oder Ausgangsleitungen,
- ein Gehäuse (4), welches das Anschlusselement (2) derart aufnimmt, dass die Anschlussstellen (3) zugänglich und sichtbar sind,
- Anzeigeelemente (5), wobei die Anzeigeelemente (5) mehrere Zustandsanzeigen mit je einem einer Zustandsanzeige zugeordnetem Lichtleiter (10) aufweisen, wobei
ein Lichtleiter (10) eine erste Leuchtfläche (12) und einen Lichteingang (11) aufweist, wobei im Inneren des Gehäuses (4) ein Leuchtmittel (21) derart angeordnet ist, dass Licht in den Lichtleiter (10) über den Lichteingang (11) eingespeist wird und zur Anzeige eines Zustands über die erste Leuchtfläche (12) austritt, dabei ist die erste Leuchtfläche (12) in einer Stirnseite (7a,7b) einer Seitenwand (6a,6b) angeordnet, **dadurch gekennzeichnet,**
**dass** der Lichtleiter (10) in der Seitenwand (6a,6b) über eine Aufnahme (30) in der Stirnseite (7a,7b) der Seitenwand (6a,6b) gehalten wird,
wobei durch die Aufnahme (30) der Lichtleiter (10) im Wesentlichen nur im Bereich der ersten Leuchtfläche (12) mit einem Teil seiner Mantelfläche (32) eine Haftung zu dem Material der Seitenwand (6a,6b) in der Aufnahme (30) aufweist, wobei aufgrund der Haftung eine feste Verbindung herrscht, wodurch der Lichtleiter (10) gehalten wird, wobei ein überwiegender Teil (33) der Mantelfläche des Lichtleiters (10) von dem Material der Seitenwand (6a,6b) entkoppelt ist, wodurch eine Weiterleitung des Lichtes zur ersten Leuchtfläche (12) verbessert wird.

2. Ein-/Ausgabebaugruppe (1) nach Anspruch 1, wobei
die Seitenwand (6a,6b) derart ausgestaltet ist, dass zwischen dem überwiegenden Teil der Mantelfläche (32) des Lichtleiters (10) und der Seitenwand ein Hohlraum angeordnet ist und derart ausgebildet ist, dass das Material der Seitenwand (6a,6b) den Lichtleiter (10) nicht berührt.

3. Ein-/Ausgabebaugruppe (1) nach Anspruch 1 oder 2, wobei eine zweite Leuchtfläche (13) in einer zum Anschlusselement (2) gerichteten Seitenfläche (8a,8b) der Seitenwand (6a, 6b) in Höhe einer Anschlussstelle (3) angeordnet ist, wodurch eine optische Anzeige in unmittelbarer Nähe zu der Anschlussstelle (3) gebildet ist und eine Diagnose erleichtert wird.

4. Ein-/Ausgabebaugruppe (1) nach Anspruch 2 oder 3, wobei der Lichtleiter (10) als ein Stück ausgestaltet ist und die Oberfläche im Bereich der zweiten Leuchtfläche (13) mit einer optischen Brechungsstelle versehen ist.

5. Ein-/Ausgabebaugruppe (1) nach einem der Ansprüche 1 bis 4, wobei in der Seitenwand (6a,6b) ein Träger (20) für das Leuchtmittel (21), insbesondere eine LED, angeordnet ist.

6. Ein-/Ausgabebaugruppe (1) nach Anspruch 5, wobei der Träger (20) als eine Folie mit Leiterbahnen ausgestaltet ist.

7. Ein-/Ausgabebaugruppe (1) nach einem der Ansprüche 1 bis 6, wobei der Lichtleiter (10) eine Ausnehmung aufweist, welche als der Lichteingang (11) ausgestaltet ist und in die das Leuchtmittel (21) eingepasst ist.

8. Ein-/Ausgabebaugruppe (1) nach einem der Ansprüche 3 bis 7, wobei der Lichteingang (11) im Wesentlichen gegenüber der zweiten Leuchtfläche (13) angeordnet ist, um die optische Anzeige in unmittelbarer Nähe zu der Anschlussstelle (3) zu verbessern.

9. Ein-/Ausgabebaugruppe (1) nach einem der Ansprüche 5 bis 8, wobei als Leuchtmittel (21) auf dem Träger (20) eine SMD-LED angeordnet ist.

10. Ein-/Ausgabebaugruppe (1) nach einem der Ansprüche 1 bis 9, wobei das Gehäuse (4) eine erste Seitenwand (6a) und eine zweite Seitenwand (6b) aufweist, wobei das Anschlusselement (2) zwischen den beiden Seitenwänden angeordnet ist und eine erste Reihe (2a) und zweite Reihe (2b) von Anschlussstellen (3) aufweist, wobei sich die erste Reihe (2a) parallel zu der ersten Seitenwand (6a) und die zweite Reihe (2b) parallel zu der zweiten Seitenwand (6b) längs erstreckt.

## Claims

1. Input/output module (1), comprising
- a connection element (2) with a plurality of connection points (3) for connecting input or output lines,
- a housing (4) which accommodates the connection element (2) such that the connection points (3) are accessible and visible,
- display elements (5), wherein the display elements (5) have a plurality of status displays, each with a fibre-optic conductor (10) associated with a status display, wherein
a fibre-optic conductor (10) has a first illuminated panel (12) and a light inlet (11), wherein in the interior of the housing (4) a light source (21) is arranged such that light is fed into the fibre-optic conductor (10) via the light inlet (11) and exits via the first illuminated panel (12) to display a status, the first illuminated panel (12) being arranged in an end face (7a, 7b) of a side wall (6a, 6b),
**characterised in that**
the fibre-optic conductor (10) is held in the side wall (6a, 6b) via a receptacle (30) in the end face (7a, 7b) of the side wall (6a, 6b),
wherein thanks to the receptacle (30) part of the peripheral surface (32) of the fibre-optic conductor (10) adheres to the material of the side wall (6a, 6b) in the receptacle (30) essentially only in the region of the first illuminated panel (12), wherein because of the adhesion a permanent connection prevails, as a result of which the fibre-optic conductor (10) is held, wherein a preponderant part (33) of the peripheral surface of the fibre-optic conductor (10) is decoupled from the material of the side wall (6a, 6b), as a result of which transmission of the light to the first illuminated panel (12) is improved.

2. Input/output module (1) according to claim 1, wherein
the side wall (6a, 6b) is configured such that a cavity is arranged between the preponderant part of the peripheral surface (32) of the fibre-optic conductor (10) and the side wall and is configured such that the material of the side wall (6a, 6b) does not touch the fibre-optic conductor (10).

3. Input/output module (1) according to claim 1 or 2, wherein a second illuminated panel (13) is arranged in a lateral surface (8a, 8b) of the side wall (6a, 6b) aligned towards the connection element (2) at the level of a connection point (3), as a result of which an optical display is formed in the immediate vicinity of the connection point (3) and a diagnosis is facilitated.

4. Input/output module (1) according to claim 2 or 3, wherein the fibre-optic conductor (10) is configured as one piece and the surface in the region of the second illuminated panel (13) is provided with an optical refraction point.

5. Input/output module (1) according to one of claims 1 to 4, wherein a carrier (20) for the light source (21), in particular an LED, is arranged in the side wall (6a, 6b).

6. Input/output module (1) according to claim 5, wherein the carrier (20) is configured as a foil with conductor tracks.

7. Input/output module (1) according to one of claims 1 to 6, wherein the fibre-optic conductor (10) has a recess which is configured as the light inlet (11) and into which the light source (21) is fitted.

8. Input/output module (1) according to one of claims 3 to 7, wherein the light inlet (11) is arranged essentially opposite the second illuminated panel (13), in order to improve the optical display in the immediate vicinity of the connection point (3).

9. Input/output module (1) according to one of claims 5 to 8, wherein an SMD LED is arranged as a light source (21) on the carrier (20).

10. Input/output module (1) according to one of claims 1 to 9, wherein the housing (4) has a first side wall (6a) and a second side wall (6b), wherein the connection element (2) is arranged between the two side walls and has a first row (2a) and second row (2b) of connection points (3), wherein the first row (2a) extends lengthways parallel to the first side wall (6a) and the second row (2b) lengthways parallel to the second side wall (6b).

## Revendications

1. Module ( 1 ) d'entrée/sortie comprenant
- un élément ( 2 ) de connexion ayant plusieurs points de connexion pour la connexion de lignes d'entrée ou de sortie,
- un boîtier ( 4 ) qui reçoit l'élément ( 2 ) de connexion de manière à ce que les points ( 3 ) de connexion soient accessibles et visibles,
- des éléments ( 5 ) d'affichage, les éléments ( 5 ) d'affichage comportant plusieurs affichages d'état ayant respectivement une fibre ( 10 ) optique associée à un affichage d'état, dans lequel
une fibre ( 10 ) optique a une première surface ( 12 ) lumineuse et une entrée ( 11 ) de lumière, un agent ( 21 ) lumineux étant disposé à l'intérieur du boîtier ( 4 ) de manière à injecter de la lumière dans la fibre ( 10 ) optique par l'entrée ( 11 ) de lumière et, pour l'affichage d'un état, à la faire sortir par la première surface ( 12 ) lumineuse, la première surface ( 12 ) lumineuse étant disposée dans un côté ( 7a , 7b ) frontal d'une paroi ( 6a , 6b ) latérale, **caractérisé**
**en ce que** la fibre ( 10 ) optique est maintenue dans la paroi ( 6a , 6b ) latérale par un logement ( 30 ) ménagé dans le côté ( 7a,7b ) frontal de la paroi ( 6a, 6b ) latérale,
dans lequel par le logement ( 30 ), la fibre ( 10 ) optique a, sensiblement seulement dans la partie de la première surface ( 12 ) lumineuse, par une partie de la surface ( 32 ) latérale, une adhérence au matériau de la paroi ( 6a , 6b ) latérale dans le logement ( 30 ), dans lequel, en raison de l'adhérence, il règne une liaison solide par laquelle la fibre ( 10 ) optique est maintenue, une partie ( 33 ) prépondérante de la surface latérale de la fibre ( 10 ) optique étant découplée du matériau de la paroi ( 6a , 6b ) latérale, ce qui améliore un acheminement de la lumière vers la première surface ( 12 ) lumineuse.

2. Module ( 1 ) d'entrée/sortie suivant la revendication 1, dans lequel la paroi ( 6a , 6b ) latérale est conformée de telle façon qu'un espace vide est disposé entre la partie prépondérante de la surface ( 32 ) latérale de la fibre ( 10 ) optique et la paroi latérale et est constitué de telle façon que le matériau de la paroi ( 6a , 6b ) latérale ne touche pas la fibre ( 10 ) optique.

3. Module ( 1 ) d'entrée/sortie suivant la revendication 1 ou 2, dans lequel une deuxième surface ( 13 ) lumineuse est disposée au niveau d'un point ( 3 ) de connexion dans une surface ( 8a , 8b ) latérale, dirigée vers l'élément ( 2 ) de connexion, de la paroi ( 6a , 6b ) latérale, en formant ainsi un affichage optique à proximité immédiate du point ( 3 ) de connexion et en rendant plus facile un diagnostic.

4. Module ( 1 ) d'entrée/sortie suivant la revendication 2 ou 3, dans lequel la fibre ( 10 ) optique est conformée sous la forme d'un tronçon et la surface, dans la région de la deuxième surface ( 3 ) lumineuse, est pourvue d'un point de réfraction optique.

5. Module ( 1 ) d'entrée/sortie suivant l'une des revendications 1 à 4, dans lequel dans la paroi ( 6a , 6b ) latérale est disposé un support ( 20 ) de l'agent ( 21 ) lumineux, notamment une DEL.

6. Module ( 1 ) d'entrée/sortie suivant la revendication 5, dans lequel le support ( 20 ) est sous la forme d'une feuille ayant des pistes conductrices.

7. Module ( 1 ) d'entrée/sortie suivant l'une des revendications 1 à 6, dans lequel la fibre ( 10 ) optique a un évidemment qui est conformé en l'entrée ( 11 ) de lumière et dans lequel l'agent ( 21 ) lumineux est adapté.

8. Module ( 1 ) d'entrée/sortie suivant l'une des revendications 3 à 7, dans lequel l'entrée ( 11 ) de lumière est disposée sensiblement en face de la deuxième surface ( 13 ) lumineuse pour améliorer l'affichage optique à proximité immédiate du point ( 3 ) de connexion.

9. Module ( 1 ) d'entrée/sortie suivant l'une des revendications 5 à 8, dans lequel une DEL-SMD est disposée comme agent ( 21 ) lumineux sur le support ( 20 ).

10. nodule ( 1 ) d'entrée/sortie suivant l'une des revendications 1 à 9, dans lequel le boîtier ( 4 ) a une première paroi ( 6a ) latérale et une deuxième paroi ( 6b ) latérale, l'élément ( 2 ) de connexion étant disposé entre les deux parois latérales et ayant une première rangée ( 2a ) et une deuxième rangée ( 2b ) de points de connexion, la première rangée ( 2a ) s'étendant parallèlement à la première paroi ( 6a ) latérale et la deuxième rangée ( 2b ) parallèlement à la deuxième paroi ( 6b ) latérale.
